# EUROPEAN PATENT APPLICATION

(11) **EP 3 741 444 A1**
(43) Date of publication of application: **25.11.2020**
(21) Application number: 20175316.7
(22) Date of filing: 19.05.2020
(51) Int. Cl.: B01D 47/10, B21D 15/02, B21D 22/02, F15D 1/00

(54) **AN IMPROVED VENTURI ELEMENT AND A MANUFACTURING METHOD THEREOF**

(30) Priority: 23.05.2019 SI 201900100
(71) Applicant: Numip d.o.o., 1000 Ljubljana (SI)
(72) Inventor: Pleterski, Matej, 8276 Bucka (SI); Zorko, Domen, 8273 Leskovec pri Krskem (SI); Jeraj, Ziga, 8290 Sevnica (SI)
(74) Representative: Patentni Biro AF d.o.o.

(57) **Abstract**

The invention belongs to the field of installations for supply and distribution of liquids, as well as to the field of venturi pipes for use in distribution of clean media. The object of the invention is an improved venturi element (1) for use in pharmacy and processing industry, which enables higher differential pressures in distribution systems for clean liquids and consequently turbulent flow, which prevents contamination of liquids.

The improved venturi element (1) according to the invention solves the problem of ensuring larger pressure difference with a special shape of the restriction, namely with a convex shape of the restriction interior, preferably in the shape of the number 8, which in comparison to known solutions causes a much larger differential pressure. The most significant advantage of the shape according to the invention is in that a large reduction of the cross-section is achieved, while the area of return branch collar or connection is minimally deformed. Due to the significantly larger cross-section reduction the pressure difference is larger, while the fluid flow rate is consequently higher.

## Description

### Field of the invention

The invention belongs to the field of installations for supply and distribution of liquids, as well as to the field of venturi pipes for use in distribution of clean media. The object of the invention is an improved venturi element for use in pharmacy and processing industry, which enables higher differential pressures in distribution systems for clean liquids and consequently turbulent flow, which prevents development of microorganisms on the walls of pipes.

### Background of the invention and the technical problem

The present invention originates from needs of various users in the pharmaceutical and process industry, where so called GMP media are used, said media being brought to sampling or supply points with distribution pipes. Venturi pipe elements are an important part of pipe system, especially in pharmaceutical distribution pipes for GMP media, demineralized or purified water, water for injections and similar. Venturi elements are based on Venturi effect, which is basically a decrease of the pressure of liquid, when it runs through a restricted part of a pipe. In fluid dynamics the flow rate of an incompressible fluid increases through a restricted part of a pipe according to the law of mass conservation, while the static pressure drops in accordance with the law of conservation of mechanical energy. The task of venturi elements in distribution pipe systems is thus generation of differential pressure in by-pass due to the flow or flow rate of the fluid in the main pipe. These by-passes (or by-passing circuits) are usually user sampling or supply points, which are not always in use, wherein fluid movement with sufficient rate (i.e. turbulent flow) has to be ensured during non-use periods in order to prevent growth of microorganizsms and consequent contamination, which can lead to contamination of the final pharmaceutical product.

Efficiency requirements for venturi elements used in pharmacy are based on standard constructional requirements for such elements and are further based on the assumption of fluid rate in the base loop 1 m/s as well as overcoming line losses due to by-pass circuit. For example, for a length of the by-pass line with an inner diameter of 10 mm, which comprises 8 pipe elbows, pressure loss in the by-pass may be calculated based on known required flow rates (turbulent flow) in the by-pass, which is in the given example 3 kPa. The pressure difference in the by-pass, which is caused by the element and its shape or construction (the Venturi effect) has to be sufficiently large to exceed the sum of all resistances in the by-pass in order to ensure sufficient flow rate.

Known solutions have significant disadvantages in reaching key characteristics, namely a sufficient pressure difference in the by-pass and consequently a required fluid flow rate. Generallly elements are installed so that the connected by-pass has the shortest possible length in order to decrease pressure loss, which in practice means that the maximum length is 6 m. Due to low effectiveness of known solutions pharmaceutical and process industry is very often using alternative solutions for GMP media distribution, which consequently means higher costs and more complicated systems.

The technical problem, which is solved by the present invention, is a constructional solution of a venturi element, which will ensure higher differential pressure and will cause turbulent flow at by-passes in order to prevent fluid contamination in the system. An additional technical problem is also how to manufacture a suitable venturi element, so that it will correspond to all constructional requirements for systems for GMP media distribution.

### State of the art

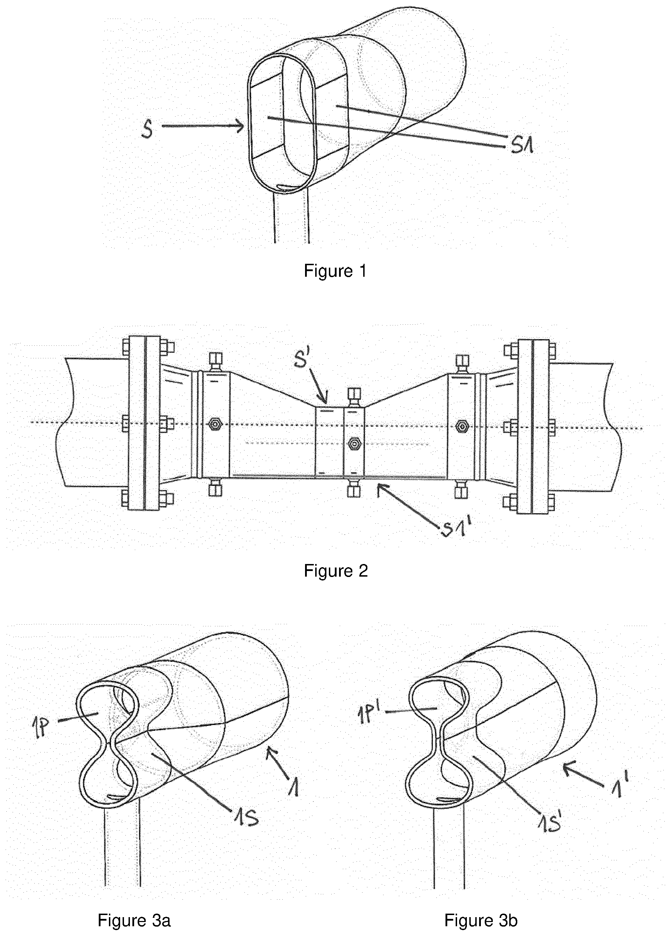

Known solutions of venturi elements are based on the principle of Venturi effect caused by the shape, which is a consequence of cold deformation of a round pipe. Such shape and manufacturing principle are disclosed in patent US4690245A. Venuri element is made from a round pipe, usually steel, which can be deformed. The pipe is compressed on opposite sides of the pipe with a suitable device, so that a narrower region is obtained lengthwise, the so compressed pipe having a cross-section as shown in figure 1. This reduces the cross-section of the pipe for approximately 40 %, which should enable sufficient differences in pressures, which are used for silencing sound of exhaust systems. All solutions based on this principle have a flat or a concave shape of the pipe interior. In case of fluid distribution systems, the flattened part is to be equipped with a connection of the return by-pass branch. This significantly limits the highest possible reduction by compression, which in practice reaches only about 20 % reduction of the cross-section.

Patent application US2004182172 discloses a flow measuring device having at least one venturi element and pressure sensors, which measure the pressure at different parts of the measuring device, wherein one of the venturi elements has two restrictions (reductions) and thus two different pressure differences. The inner cross-section of the pipe is decreased with a concentric cylindrical insert in the middle of the pipe. The concentric shape of venturi elements in distribution systems for GMP media is not desirable, as it complicates drainage of these systems.

One of the variants of venturi element is a pipe element composed of excentric reducers as disclosed in patent US7299707B1 and in figure 2. Said figure shows a venturi element with a pipe body having two restrictions, which are joined from each side of both restrictions in a cylindrical spool, wherein the bottom walls of each part are aligned and have a smooth surface. The disadvantages of the excentric pipe element are mainly obvious during its manufacture. Due to the special shape the manufacturing process is a multi-step process including many steps of machining of components and subsequent joining, which affects the cost-efficiency of such elements.

All described solutions differ from the present invention in their shape.

### Description of the solution of the technical problem

Drop in the pressure of the liquid (fluid) in the flattened part of the pipe and thus the increase of flow rate (velocity) could be emphasized with additionally reduced cross-section of the flattened part of the pipe based on laws of physics, but in pharmaceutical processes the magnitude of flattening of venturi elements is highly limited as by-pass return branch connection is manufactured at the site of maximal reduction. Hence, vast reduction of the cross-section is not possible in practice.

The improved Venturi element according to the invention solves the problem of ensuring larger differential pressure with a special shape of the flattened part, wherein its interior is convex, preferably in the shape of the number 8, which in comparison to known products causes a significantly larger differential pressure. The most important advance of the pipe with a cross-section shaped as number 8 is in that a large reduction of the cross-section is achieved, while the deformation is minimized so that the area of collar or by-pass return branch connection is not essentially affected. Due to the significantly larger reduction of the cross-section the pressure difference is higher, which consequently leads to higher fluid flow rate. Despite this, the dimension of the flattened part (bottom or upper part of the number 8) remains sufficiently large to enable manufacturing of by-pass branch connection joint.

The improved venturi element is essentially a pipe element with a reduction of the cross-section made with deformation (metal forming). In the area of the basic shape and at the site of the reduction by-pass branch connection may be made, while the deformation is preferably realised with use of forming tool (punch), so that said punch press at the site of required reduction until the convex shape of the interior is achived.

The deformed cross-section is usually in the shape of the number 8 and may be symmetrical or nonsymmetrical. It is also possible to shape the cross-section reduction in other symmetrical and nonsymmetrical cross-sections such as for example: number 8 with a flattened and elongated middle part (similar to the shape of a bone), letter B, shape of a classic bulb, etc... The inner surfaces of the pipe may be in contact or can be at a certain distance, usually the distance is from 0.5 mm to 10 mm.

The improved venturi element may be made from deformable metal pipes with any diameter, wherein the usual diameters suitable for distribution systems are between 29 and 85 mm. The material has its typical roughness of the inner surface smaller than 0.8 µm.

It may be installed in main branches of GMP media distribution systems and allows connection of by-pass branches, which usually serves as occasional point of use. The latter is usually made from pipes of smaller diameter if compared to the main pipe. The element itself may be welded into the distribution system or is installed into said system with detachable mechanical connections. The same is valid for connection of by-pass circuit.

The method for manufacturing the improved venturi element comprises the following steps:
a) Selecting a pipe made from a suitable material and having appropriate dimensions and thickness;
b) Manufacturing collars or branch connections, respectively, for connecting a by-pass with known methods;
c) Inserting the pipe into a movable retaining cage, which limits deformation transversely to the direction of deformation pistils;
d) Making a reduction of the cross-section of the venturi element at the place of return branch connection, so that the required cross-section having a convex interior, preferably in the shape of the number 8, is obtained, using said deformation punches, wherein at least one of them is movable;
e) The depth of deformation with punches depends on the required cross-section reduction, wherein the deformation is usually carried out until the contact of inner surfaces of the pipe.

The device for forming the venturi element according to the invention comprises two forming punches, each of them installed on a separate carrier, wherein at least one of the punches is movably mounted in the housing of the said device. The shape of the pistils may be such that it ensures a deformed cross-section of a specific shape having a length of approximately three-fold of the branch pipe diameter, usually about 40 mm. The angle at which the fluid enters into the reduction may be around 60°, while the angle at which the fluid exits may be around 30 °. The latter is not a key characteristic, as the element may operate in the opposite direction of the fluid flow, but its effect is smaller. The device further comprises a movable retaining cage installed with confining elements. The movable retaining cages are dimensioned based on the pipe diameters in order to accommodate the pipe to be reshaped into the improved Venturi element according to the invention. With regard to the selected shape of punches the cross-section of the improved Venturi element may have the shape of number 8, shape of a bone, in the shape of letter B or any other shape having a convex interior. The punches usually compress the pipe with a force of 20 to 80 kN, the preffered force being from 60 to 70 kN, in order to reach the optimum interior shape of the element.

The venturi element according to the invention is a highly efficient pipe element, which enables cheaper and technically less demanding solution of point point of use execution especially in GMP media distribution systems, as its role is generation of differential pressure and consequently forced circulation of the fluid in by-pass at rates ensuring turbulent flow. In comparison to known solutions the element according to the invention generates five-fold or even higher differential pressures and rates in by-passes. Furthermore, this means that due to the larger differential pressure a longer by-pass for the supply point may be installed, which is not possible with known Venturi elements. Hence, the present invention has the potential to change the way installations for supply points in GMP media distribution system are designed and thereby significantly simplifies their construction.

The improved venturi element according to the invention will be further described in more detail based on exemplary embodiments and figures, which show:
- Figure 1: Cross-section of a known venturi element
- Figure 2: Known excentric venturi element
- Figure 3a: Cross-section of the improved venturi element according to the invention: cross-section in the shape of the number 8
- Figure 3b: Cross-section of the improved venturi element according to the invention: cross-section in the shape of the number 8 with an elongated middle part
- Figure 4: Side cross-section of the improved venturi element according to the invention and a schematic view of its installation into a main line of a distribution system for GMP fluids and by-pass line including three-way sampling valve
- Figure 5: Measured differential pressure (full shape) and flow rate (empty shape) depending on the flow velocity through known Venturi elements (triangles) and the improved Venturi element according to the invention (circles)
- Figure 6: Simulated difference in rate profiles between known Venturi elements and the improved Venturi element according to the invention
- Figure 7: Transverse cross-section of the tool for forming the elements
- Figure 8: Longitudinal cross-section of the tool for forming the elements

Figure 1 shows a cross-section of a known venturi element, wherein the pipe is flattened on a part S, so that the cross-section of the flattened part is oval. The inner surface S1 of such element is thus flat. Figure 2 shows a known excentric venturi element, wherein the bottom walls of each part of the pipe, including the reductions S', are mutually aligned and have a smooth surface S1'. Both known solutions differ from the present invention in the shape of the cross-section, specifically in that the venturi element 1, 1' according to the invention has additionally reduced cross-section of the flattened part 1s, 1s', so that the transverse cross-section 1p, 1p' has an approximate shape of the number 8 as shown in figure 3. The shape of the additionally reduced cross-section may be any other as described above, however, the 8-shaped embodiment is preferred.

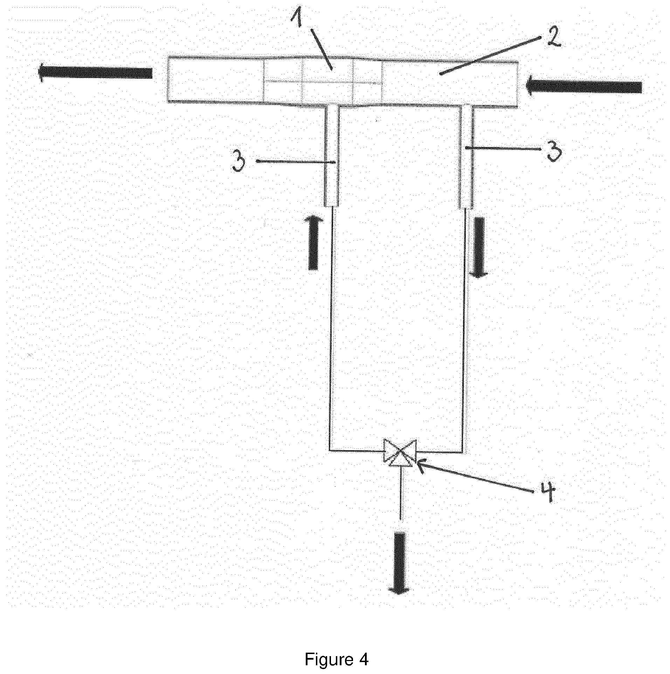

Figure 4 shows a side cross-section of the improved venturi element 1 according to the invention and a schematic view of a possible installation into the main line 2 of the distribution system for clean liquids (GMP media) and a by-pass 3 with a sampling valve 4. The arrows show the direction in which the fluid moves.

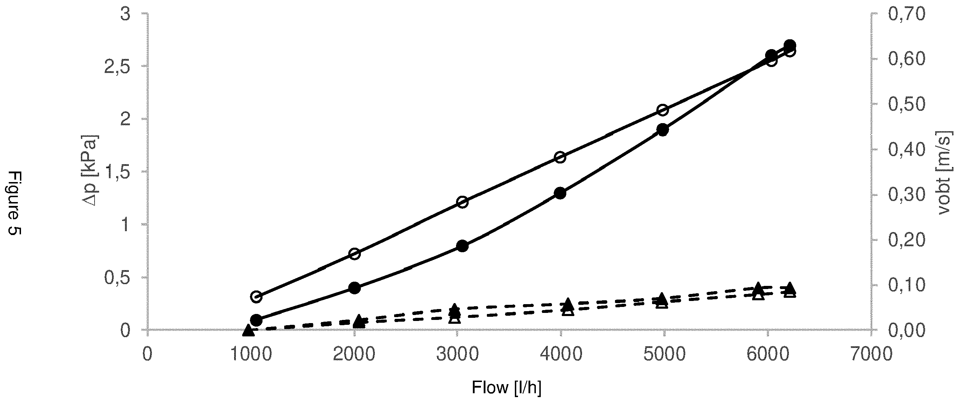

The preferred embodiment of the venturi element according to the invention has been used for testing and comparison with known solutions.
As shown in figure 5 the ratio Δp and achieved flow velocities increase with increasing flow. Triangles mark the values for known venturi element in size class DN40, while the circles mark the values for the improved Venturi element according to the invention. The measurements were performed usiang a special calibration system comprising a water reservoir, a pump, a damper valve, Corriolis measuring device and piping with connecting fitting, where the venturi element was coupled. Between the by-pass connection points of the element pressure sensors were connected, and to said sensors a 4-metre-long smooth plastic pipe with a diameter of 11 mm was connected, wherein a device for measuring flow was installed in the said smooth pipe. The pressure difference is thus measured between two connections of the by-pass branches and the rate is calculated from the measured flow with regards to the inner diameter of the pipe. The measured differential pressure is shown with a full geometric shape and the flow velocity is shown with an empty geometric shape. A known venturi element has a Δp between 0 and 0,4, while the improved venturi element has a pressure difference between 0,1 and 2,7. A similar difference has been determined for flow velocity, which are between 0 and 0,08 m/s for known elements and from 0,1 to 0,62 m/s for the element according to the invention. On average, the Δp was five-fold higher and the flow velocity eight-fold higher for the improved venturi element.

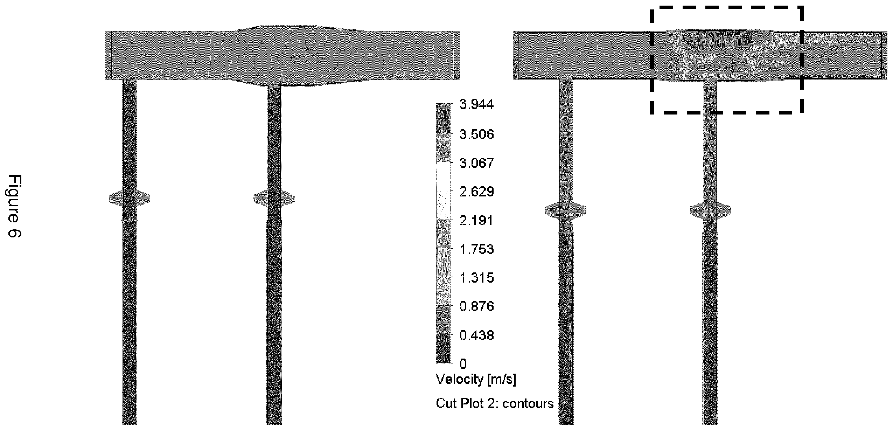

Figure 6 shows a simulation of differences in flow rate profiles between known and the improved venturi element. Left panel shows the results for a known venturi element, while the right panel shows the results for the venturi element according to the invention. A significant difference in rate is visible at the site of cross-section reduction (marked with a rectangle with hatched lines), which is the underlying cause of the results shown in figure 5.

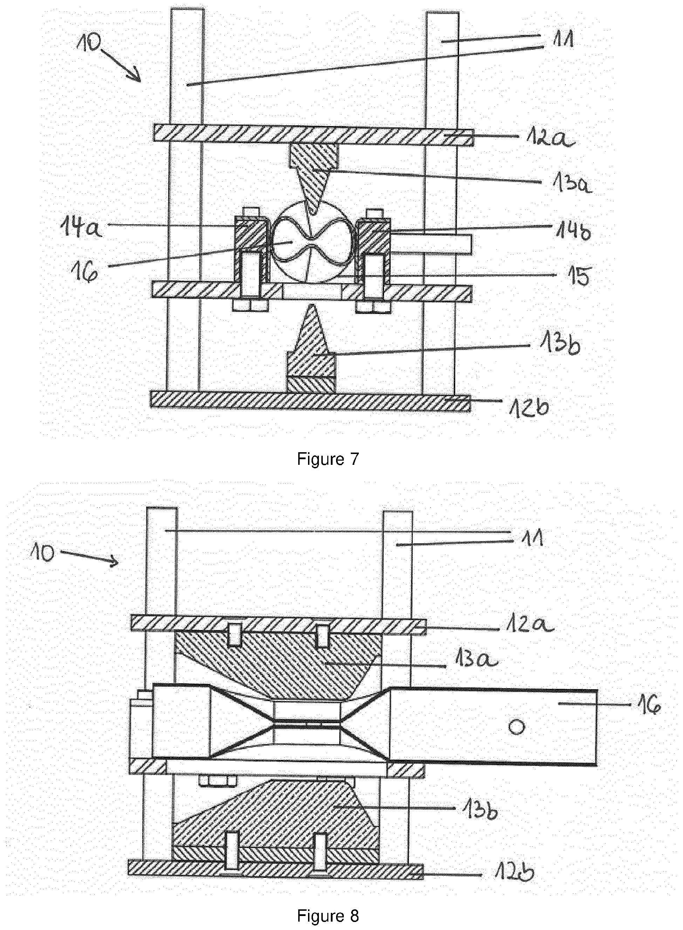

Figure 7 shows a cross-section of the device for manufacturing the venturi element. The device 10 for manufacturing the improved venturi element according to the invention comprises four guides 11 with two carriers 12a, 12b, forming punches 13a, 13b, one of said punches being movable. In a housing 10 a movable retaining cage 15 is installed with restraining elements 14a, 14b, said cage being arranged to receive a pipe 16, which is to be reshaped into the venturi element according to the invention. The essential part of the device 10 are two forming punches 13a, 13b, the shape of which defines the shape of the reduction (for example the number 8 shape). Their shape in the part, which comes into contact with the pipe, has a preferably triangular cross-section, but it may also be trapezoid in case a cross section with a shape of a bone (i.e. number 8 with an elongated middle part) is to be achieved. The punches may have different shapes, for example one is flat and the other is approximately triangular, in order to obtain an element with a B-shaped cross-section reduction. The process of cold metal forming causes deformations in all directions, wherein the deformation in vertical direction is required and the deformation in the horizontal direction is limited with the freely-movable restriction cage.

Figure 8 shows a side cross-section of the device for shaping the venturi element. The difference in the slopes of cross-section reductions is clearly visible. This geometrical difference contributes to a faster increase of flow rate, which consequently leads to higher differential pressure inside the by-pass.

The described device is used in the method for manufacturing the improved venturi element, wherein in the first step a suitable pipe is selected, which is followed by manufacturing of branch connections with known methods. The pipe is placed into the restriction cage of the manufacturing device, wherein pressure to the carriers with deforming punches causes reduction of the pipe cross-section until the reduction has a convex interior, preferably in the shape of the number 8. Preferably the pressure is applied until both inner surfaces of the pipe come into contact, but pressure application may be terminated earlier so that a gap between both inner surfaces is left.

## Claims

1. An improved venturi element, which is shaped as a pipe element with a reduction, wherein the reduction has a cross-section with convex interior.

2. The improved venturi element according to claim 1, **characterized in that** the cross-section may have the shape of number 8, letter B, number 8 with an elongated middle part, or the shape of a classic light bulb, preferably in the shape of number 8.

3. The improved venturi element according to claim 1 or claim 2, **characterized in that** the cross-section is symmetrical or non-symmetrical.

4. The improved venturi element according to any of the preceding claims, **characterized in that** the inner surfaces of the element may be in contact or can have a space between them.

5. The improved venturi element according to any of the preceding claims, **characterized in that** the reduction is made with cold deformation process using deforming punches, which compress the pipe and shape a suitable reduction.

6. The improved venturi element according to any of the preceding claims, **characterized in that** the length of the restriction is approximately three-fold of the diameter of the by-pass, usually around 40 mm.

7. The improved venturi element according to any of the preceding claims, **characterized in that** it is made from deformable metal pipes with any diameter, preferably with a diameter between 29 and 85 mm.

8. A distribution system for clean liquids with the improved venturi element according to any claim from 1 to 7, to which a by-pass branch is connected.

9. A method for manufacturing the venturi element according to any claim from 1 to 7, the method comprising the following steps:
a) Selecting a pipe made from a suitable material and having appropriate dimensions and thickness;
b) Manufacturing collars or branch connections, respectively, for connecting a by-pass with known methods;
c) Inserting said pipe into a movable retaining cage, which limits deformation transversely to the direction of forming punches;
d) Making a reduction of the cross-section of the venturi element at the site of return branch connection, so that the required cross-section having a convex interior, preferably in the shape of the number 8, is obtained, using said forming punches, wherein at least one of them is movable.

10. The method according to the preceding claim, **characterized in that** the depth of the compression with punches depends on the required cross-section reduction, preferably to the stage when inner surfaces of the pipe come into contact at the site of compression with forming punches.

11. The method according to any claim from 9 to 11, **characterized in that** the process of cold forming causes a deformation in all directions, wherein the deformation in horizontal direction is limited with a freely-movable retaining cage.

12. A device for manufacturing the improved venturi element according to any claim from 1 to 7, the device comprising a housing, in which the following is installed:
- Two forming punches, each installed on its own holder, wherein at least one of the punches is movably installed in the housing of the device; and
- A movable retaining cage, movably installed, wherein its restriction elements are arranged in a way to receive a pipe element for forming into the improved Venturi element according to any claim from 1 to 7.

13. The device according to claim 12, **characterized in that** the shape of the forming punches is chosen based on the required cross-section selected in the shape of cross-sections with a convex interior, such as shape of number 8, letter B, number 8 with an elongated middle part, or shape of a classic light bulb.

14. The device according to any claim from 12 to 13, **characterized in that** the shape of forming punches is different or the same, depending on the required symmetricity of the cross-section.

15. The device according to any claim from 12 to 14, **characterized in that** the shape of at least one of the forming punches arranged to contact the pipe has a triangular, rectangular or trapezoid cross-section.
